(19) Europäisches Patentamt

European Patent Office

Office européen des brevets

(11) **EP 0 846 610 B1**

(12) **EUROPÄISCHE PATENTSCHRIFT**

(45) Veröffentlichungstag und Bekanntmachung des Hinweises auf die Patenterteilung:
**19.09.2001   Patentblatt 2001/38**

(51) Int Cl.7: **B62D 6/00**

(21) Anmeldenummer: **97121452.3**

(22) Anmeldetag: **05.12.1997**

(54) **Verfahren zur Lenkunterstützung eines Fahrers eines Strassenfahrzeugs**

Auxillary steering method for helping the driver of a road vehicle

Procédé de direction auxilliaire pour aider le conducteur d'un véhicule routier

(84) Benannte Vertragsstaaten:
**FR GB IT**

(30) Priorität: **07.12.1996  DE 19650691**

(43) Veröffentlichungstag der Anmeldung:
**10.06.1998   Patentblatt 1998/24**

(73) Patentinhaber: **Deutsches Zentrum für Luft- und Raumfahrt e.V.**
**51147 Köln (DE)**

(72) Erfinder: **Ackermann, Jürgen, Prof. Dr.**
**82211 Herrsching (DE)**

(74) Vertreter: **von Kirschbaum, Albrecht, Dipl.-Ing. Patentanwalt,**
**Postfach 15 20**
**82102 Germering (DE)**

(56) Entgegenhaltungen:
EP-A- 0 309 293          DE-A- 4 028 320
DE-A- 4 031 304          DE-A- 4 114 165
GB-A- 2 266 957          GB-A- 2 269 571

• ACKERMANN J ET AL: "FAHRSICHERHEIT DURCH ROBUSTE LENKREGELUNG" AUTOMATISIERUNGSTECHNIK - AT, Bd. 44, Nr. 5, 1.Mai 1996, Seiten 219-225, XP000583464

**Beschreibung**

Die Erfindung betrifft ein Verfahren zur Lenkunterstützung eines Fahrers eines Straßenfahrzeugs durch Berechnen eines Zusatzwinkels und durch dessen Addition zum vom Fahrer kommandierten Rad-Einschlagwinkel.

Bei der Lenkung eines Autos muß ein Fahrer zwei Teilaufgaben lösen, nämlich die Spurführung und die Gierstabilisierung. Hinsichtlich der Spurführung plant der Fahrer, ausgehend von der momentanen Position und Geschwindigkeit des Fahrzeugs, laufend durch Vorausschau eine aktuelle Fahrspur, deren Anfangstangente durch den Geschwindigkeitsvektor vorgegeben ist. Um das - als Massepunkt gedacht - Fahrzeug an dieser Fahrspur entlang zu führen, muß er ihm über das Lenkrad eine seitliche Beschleunigung aufprägen. Bei trockener Straße und guter Sicht ist diese Spurführung für den Fahrer eine sicher beherrschte Routineaufgabe.

Ein reales Fahrzeug verhält sich jedoch nicht wie ein Massepunkt; es hat vielmehr ein Trägheitsmoment und führt eine Gierbewegung um eine Hochachse aus. Solange diese Gierbewegung in gewohnter Weise verläuft, braucht der Fahrer sie nicht zu beachten. Gefährliche Situationen treten jedoch bei unerwarteten Gierbewegungen auf, z.B. beim Bremsen auf glatter Straße, bei Seitenwind oder bei einer Reifenpanne. Hierdurch wird ein Störmoment um die Hochachse erzeugt, das zu einer für den Fahrer überraschenden Gierbewegung führt. Durch seine Reaktionszeit und anschließende Überreaktion beherrscht der Fahrer solche Situationen oft nicht sicher und schnell genug, um einen Unfall zu vermeiden.

Automatische Fahrer-Untersützungssysteme können schneller und präziser reagieren als der Mensch und damit Unfälle verhindern. Es handelt sich dabei um Regelungssysteme, die die Gierbewegung beispielsweise mittels eines Gierratensensors, messen und das verursachende Störmoment durch ein Gegenmoment kompensieren. Dieses Gegenmoment kann beispielsweise durch Einzelradbremsung (siehe A.Th. van Zanten, R. Erhardt, G. Pfaff, Die Fahrdynamikregelung von Bosch, Automatisierungstechnik 1996, S. 359 bis 365.) oder Zusatzlenkung der Hinterräder oder der Vorderräder erzeugt werden (siehe J. Ackermann, T. Bünte, W. Sienel, H. Jeebe, K. Naab, Fahrsicherheit durch robuste Lenkregelung, Automatisierungstechnik 1996, S. 219 bis 225).

Dabei hat die Einzelradbremsung den Vorteil, daß sie durch Erweiterung der vorhandenen ABS-Technologie preiswert gebaut werden kann, sie hat aber auch konzeptionelle Nachteile gegenüber den Zusatzlenksystemen. So wird beim Bremsen bei ungleichem Kraftschluß rechts und links die Vermeidung des Schleuderns bei der Einzelradbremsung mit einem längeren Bremsweg erkauft, während durch ein Zusatzlenksystem Störmomente aufgrund unsymmetrischer Bremskräfte kompensiert werden können, so daß Schleudervermeidung und kurzer Bremsweg miteinander vereinbar sind.

Außerdem kann ein Lenksystem kontinuierlich betrieben werden, währen die Bremse aus Energie- und Verschleißgründen nur im Notfall automatisch aktiviert wird. Schließlich werden zur Erzeugung eines erforderlichen Gegenmoments bei der Lenkung nur geringere Reifenkräfte benötigt als bei der Bremsung, da der Hebelarm etwa doppelt so groß ist.

Zusatzlenkungen der Hinterräder sind insbesondere von japanischen Herstellern entwickelt worden. Dabei sind bei der Allradlenkung meist Vorteile in der Manövrierbarkeit und bei der Verminderung des Untersteuerns in der Kurve bestimmend. Neuerdings tritt aber auch das Motiv der Fahrunterstützung gegen Störmomente auf. Wegen der Kosten haben Allrad-Lenkungssysteme allerdings keine große Verbreitung gefunden.

Im folgenden wird daher die Zusatzlenkung der Vorderräder untersucht. Eine grundsätzliche Eigenschaft geregelter Systeme ist, daß durch Rückführungen die Dynamik verändert wird. Für nominale Werte der Fahrzeugparameter, wie beispielsweise der Masse, des Trägheitsmoments, der Reifenparameter u.ä., und des Betriebsfalls, wie beispielsweise der Fahrgeschwindigkeit, der Straßenbeschaffenheit u.ä., wird die Dynamik durch optimale Auslegung der Regelung verbessert. Sie kann aber für andere Parameterwerte verschlechtert werden, so daß aufwendige Parameterschätzungen und Adaptierungen des Reglers als Ausweg betrachtet werden.

In EP A-0 309 293 ist ein Verfahren zum Steuern des Vorderradlenkwinkels beschrieben, wobei die Dämpfungseigenschaft der Gierbewegung des Fahrzeugs dadurch verbessert wird, daß ein gefühlter Gierratenwert dynamisch zum Kompensieren des Vorderradlenkwinkels rückgekoppelt wird, um so den Dämpfungskoeffizienten der Gierbewegung des Fahrzeugs zu vergrößern.

Aus DE-A-41 14 165, die als nächster Stand der Technik nach dem Oberbegriff des Anspruchs 1 zu betractten ist, ist eine Lenksteuervorrichtung für ein Straßenfahrzeug beschrieben, bei welchem eine Lenkbeaufschlagungseinrichtung zum Lenken des Fahrzeugs durch Verändern einer der Vorderrad- oder Hinterradlenkwinkel in Abhängigkeit von einem Steuersignal vorgesehen ist, welches als ein Steuerlenkeingang verwendet wird. Hierzu sind ein Sensor zum Erfassen einer Fahrzeugbewegung wie der Gierrate, und eine Steuereinrichtung zum Steuern der Fahrzeugbewegung durch Erzeugen eines Steuersignals vorgesehen. Mittels der Steuereinrichtung wird eine abgeschätzte Variable der Fahrzeugbewegung aus einem Lenkbefehl des Fahrers und dem Steuerlenkeingang unter Verwendung von ein oder mehreren vorbestimmten Übertragungsfunktionen bestimmt und die erfaßten und abgeschätzten Variablen der Fahrzeugbewegung werden verglichen, um daraus eine Abweichung zwischen denselben zu bestimmen. Ferner wird von der Steuereinrichtung der Lenksteuereingang derart festgelegt, daß die Abweichung unter Verwendung einer vorbestimmten Kompensationsübertragungsfunktion und einer vorbestimmten Filterübertragungsfunktion zur Filterung der Abweichung herabgesetzt wird.

In der robusten Regelung wird dagegen versucht, mit einem fest eingestellten Regler einen großen Bereich von möglichen Parameterwerten abzudecken. Übliche Verfahren schätzen den Einfluß von Parameterschwankungen ab und versuchen, ihn bei der Regleroptimierung gering zu halten.

Von der Anmelderin wurde ein anderer Weg beschritten, der nicht auf einer numerischen Optimierung des Reglers für ein bestimmtes Fahrzeug beruht, sondern vielmehr auf einer detaillierten Analyse der strukturellen Eigenschaften einfacher mathematischer Fahrzeugmodelle.

Die Grundidee des von der Anmelderin entwickelten Verfahren ist, die beiden Teilaufgaben der Lenkung, also Spurführung und Gierstabilisierung, zunächst einmal ganz strikt und für beliebige Fahrzeugparameter und Betriebsfälle voneinander zu trennen. Im Sinne der Systemtheorie wird ein Rückführ-Regelgesetz so bestimmt, daß die Gierrate nicht von der Querbeschleunigung des Fahrzeugs (an einer noch genau zu spezifizierenden Stelle) aus beobachtbar ist, oder was dem gleichwertig ist, daß die Gierrate nicht vom Schräglaufwinkel der vorderen Reifen aus beobachtbar ist. Diese Eigenschaft wird auch als robuste einseitige Entkopplung bezeichnet.

Interessanterweise führt dieser gedankliche Ansatz auf eine eindeutige Lösung in Form eines Regelalgorithmus, der in einem Mikroprozessor im Fahrzeug implementiert wird und für die richtige Ansteuerung des Lenkmotors für die Zusatzlenkung der Vorderräder sorgt. Die Grundform dieses Verfahrens ist in DE 40 28 320 patentiert und wurde in einem Versuchsfahrzeug implementiert. Bei Versuchen mit Seitenwind und Bremsen mit ungleichem Kraftschluß rechts und links konnten wesentliche Sicherheitsvorteile des Konzepts nachgewiesen werden. (Siehe J. Ackermann u.a., wie oben angeführt).

Das Regelungsverfahren nach DE 40 28 320 ist unter einigen vereinfachenden Annahmen hergeleitet, die in der Praxis allenfalls näherungsweise erfüllt sind. Insbesondere wurde angenommen:

a) Das Fahrzeug hat eine ideale Massenverteilung, bei der das Trägheitsmoment durch zwei an Vorder- und Hinterachse konzentrierte Massen darstellbar ist. Diese Annahme war bei dem Versuchsfahrzeug sehr gut erfüllt, gilt aber nicht für beliebige Fahrzeuge. Eine Verallgemeinerung des Regelgesetzes für andere Massenverteilungen wurde zwar vorgeschlagen, sie setzt aber immer noch voraus, daß sich der Fahrzeug-Schwerpunkt nicht verschiebt. Dies kommt aber beispielsweise bei schwerer Beladung des Kofferraums durchaus vor;

b) Die Abhängigkeit der Reifen-Seitenkraft vom Schräglaufwinkel wurde mit Hilfe der Schräglaufsteifigkeit linearisiert. Das nichtlineare und durch Straßenverhältnisse rasch veränderliche Kraftschlußverhalten stellt aber das wichtigste Robustheitsproblem bei der Fahrzeugführung dar.

c) Die Fahrgeschwindigkeit sollte sich während des Lenkvorgangs nur unwesentlich ändern, so daß sie als konstant angenommen wurde. Bisher wurde aber noch keine Verbesserung des Regelgesetzes für den Fall harter Beschleunigungs- und Bremsvorgänge entwickelt.

Ein weiterer Nachteil des Verfahrens nach DE 40 28 320 besteht darin, daß bei hohen Geschwindigkeiten eine gegenüber dem konventionellen Fahrzeug verminderte Gierdämpfung auftritt.

Aufgabe der Erfindung ist es daher, den Grundgedanken der einseitigen robusten Entkopplung von Gier- und Seitenbewegungen des Fahrzeugs in der Weise weiterzuführen, daß die vorstehend angeführten Einschränkungen entfallen. Gemäß der Erfindung ist diese Aufgabe durch ein Verfahren zur Lenkunterstützung eine Fahrers eines Straßenfahrzeugs mit den Merkmalen des Anspruchs 1 gelöst. Vorteilhafte Weiterbildungen sind Gegenstand der auf den Anspruch 1 mittelbar oder unmittelbar rückbezogenen Ansprüche.

Gegenüber dem Verfahren nach DE 40 28 320 ist das Verfahren gemäß der Erfindung auf eine größere Klasse von Fahrzeugen und sicherheitskritischen Betriebsfällen anwendbar. Außerdem erlaubt das erfindungsgemäße Verfahren das Festlegen einer gewünschten Gierdämpfung.

Nachfolgend wird die Erfindung anhand der Zeichnungen im einzelnen erläutert. Es zeigen:

Fig.1    Fahrzeugkoordinaten eines als starrer Körper ausgebildeten Fahrzeugs;

Fig.2    in einer schematischen Darstellung am Fahrzeug auftretende Kräfte und Momente;

Fig.3    ebenfalls in einer schematischen Darstellung an einem Vorderrad auftretende Kräfte mit den zugehörigen Winkeln;

Fig.4    in einer schematischen Darstellung die verschiedenen Geschwindigkeitsvektoren eines in Bewegung befindlichen Kraftfahrzeugs und dessen Schwimmwinkel;

Fig.5 eine schematische Darstellung einer Wirkungsrichtung zwischen einseitig entkoppelten Teilsystemen, und

Fig.6 eine liniarisierte Darstellung von Wirkungsrichtungen zwischen den einseitig entkoppelten Teilsystemen.

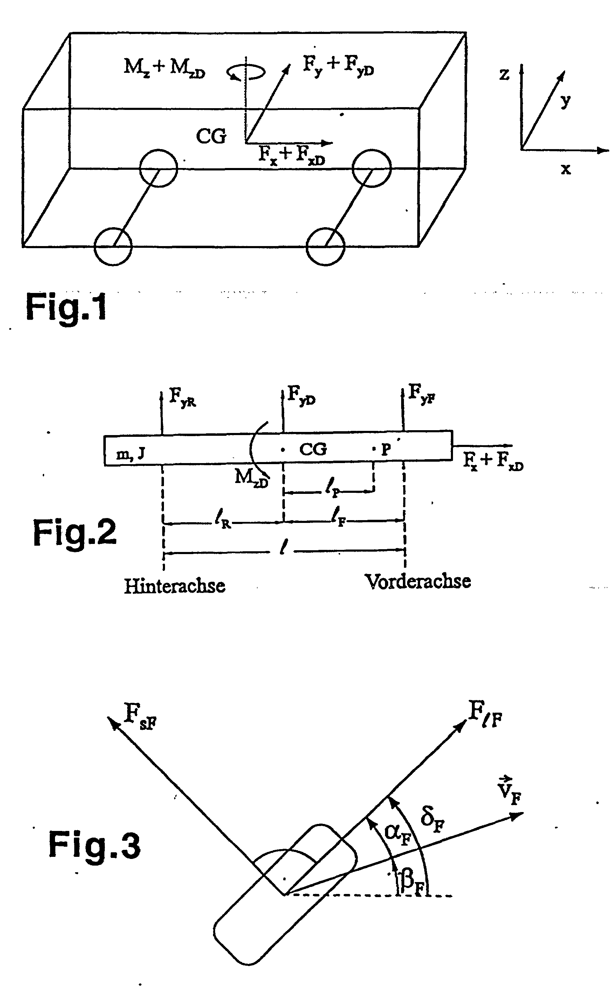

Wie der schematischen Darstellung in Fig.1 zu entnehmen ist, wird ein Fahrzeug als ein starrer Körper mit einer Masse m (in kg) betrachtet, dessen Hauptträgheitsachsen identisch zu den rechtwinkligen Koordinatenachsen x(vorwärts), y(links) und z(oben) sind. In Fig.1 ist mit CG der Schwerpunkt bezeichnet, an dem Kräfte $F_x + F_{xD}$ in der x-Richtung und Kräfte $F_y + F_{yD}$ in der y-Richtung angreifen. Das Drehmoment um die z-Achse durch den Schwerpunkt ist mit $M_z + M_{zD}$ bezeichnet. Die modellhafte Darstellung wird weiter dadurch vereinfacht, daß nur die ebene Bewegung mit drei Freiheitsgraden betrachtet wird, d.h. eine Verschiebung in der x- und der y-Richtung sowie eine Drehung um die z-Achse. Oder anders ausgedrückt, die Nickbewegung (Drehung um die y-Achse), die Wankbewegung (Drehung um die x-Achse) und die Hubbewegung (Verschiebung in z-Richtung) werden nicht dynamisch modelliert. Nach Newton und Euler gilt dann:

$$m(\dot{v}_x - rv_y) = F_x + F_{xD} \tag{1}$$

$$m(\dot{v}_y + rv_x) = F_y + F_{yD} \tag{2}$$

$$J\dot{r} = M_z + M_{zD} \tag{3}$$

wobei mit $v_x$ und $v_y$ die Geschwindigkeitskomponenten (in m/s) in der x- bzw. y-Richtung bezeichnet sind, und mit r die Giergeschwindigkeit (in Radian/s) um die z-Achse bezeichnet ist. Mit J ist das Trägheitsmoment (in kg m$^2$) um die z-Achse durch den Schwerpunkt bezeichnet. Es sei $v_x > 0$, d.h. es wird nur die Vorwärtsfahrt berücksichtigt.

Die für die Lenkdynamik wesentlichen Kräfte treten zwischen Reifen und Straßenoberfläche auf. In der automobiltechnischen Literatur ist es daher gebräuchlich, zur Herleitung eines Einspurmodells den Schwerpunkt CG auf die Straßenoberfläche zu projizieren, und nur die Bewegung in der Straßenebene zu betrachten.

Die in der Straßenebene auftretenden Kräfte sind in Fig.2 in einer Ansicht von oben dargestellt. Hierbei sind mit $F_{yR}$ und $F_{yF}$ die seitlichen Achskräfte hinten (R = rear) bzw. vorn (F=Front) und die gesamte Reifenkraft in der y-Richtung ist mit $F_y = F_{yR} + F_{yF}$ bezeichnet. In der Größe $F_{yD}$ sind sämtliche sonstige Seitenkräfte zusammengefaßt, wie beispielsweise ein Seitenwind, eine Schwerkraftkomponente bei seitlich geneigter Bahn. Die Summe der Reifenkräfte in der x-Richtung ist mit $F_x$ bezeichnet; diese Kräfte rühren von dem Antrieb und der Bremse her. Mit $F_{xD}$ sind alle übrigen Kräfte in der x-Richtung zusammengefaßt, wie beispielsweise der Luftwiderstand, eine Schwerkraftkomponente an Steigungen, usw. Das Moment um die Hochachse setzt sich zusammen aus dem Moment der Reifenkräfte $M_z = F_{yF}\ell_F - F_{yR}\ell_R$ und Störmomenten $M_{zD}$, beispielsweise aus unsymmetrischen Bremskräften, einem Reifendruckverlust, einem nicht am Schwerpunkt angreifenden Seitenwind, u.ä.. Eine wichtige Aufgabe des Fahrerunterstützungssystems liegt darin, den Einfluß von Störmomenten $M_{zD}$ auf die Giergeschwindigkeit r gering zu halten.

Die größte Modellunsicherheit besteht in den Reifenkräften. Sie können auch schnell variieren, beispielsweise bei Eisresten auf sonst trockener Straße. Sie hängen von den Schräglaufwinkeln der Reifen ab und diese wiederum von der Giergeschwindigkeit r und vorne vom Einschlagwinkel $\delta_F$ der Vorderräder. Vorn ist, wie noch gezeigt wird, eine Kompensation des Einflusses der Giergeschwindigkeit r mit Hilfe des Einschlagwinkels $\delta_F$ möglich. Ohne Zusatzlenkung der Hinterräder geht das bei $F_{yR}$ nicht.

Eine robuste Entkopplung des Einflusses der Giergeschwindigkeit r ist also nur an einer Stelle möglich, an der die Querbeschleunigung nicht von $F_{yR}$ abhängt. Diese Stelle wird dadurch bestimmt, daß für einen zunächst noch beliebigen Punkt P im Abstand $\ell_p$ vor dem Schwerpunkt (siehe Fig.2) die Querbeschleunigung berechnet wird aus:

$$a_{yP} = a_y + \ell_P \dot{r}$$

$$= \frac{F_{yF} + F_{yR} + F_{yD}}{m} + \ell_P \frac{F_{yF}\ell_F - F_{yR}\ell_R + M_{zD}}{J}$$

$$= F_{yF}\left(\frac{1}{m} + \frac{\ell_P \ell_F}{J}\right) + F_{yR}\left(\frac{1}{m} - \frac{\ell_P \ell_R}{J}\right) + \frac{F_{yD}}{m} + \frac{M_{zD}\ell_P}{J}$$

Der Einfluß von $F_{yR}$ verschwindet genau dann, wenn

$$\ell_P = \frac{J}{m\ell_R} \tag{4}$$

gewählt wird. Damit ist

$$a_{yP} = F_{yF}\frac{\ell}{m\ell_R} + \frac{F_{yD}}{m} + \frac{M_{zD}}{m\ell_R} \tag{5}$$

Die Giergeschwindigkeit r geht nur über die Seitenkraft $F_{yF}$ der Vorderachse in $a_{yP}$ ein. Das Ziel der robusten Entkopplung ist erreicht, d.h. die Giergeschwindigkeit r ist nicht beobachtbar von $a_{yP}$, wenn es gelingt, die Seitenkraft $F_{yF}$ von der Giergeschwindigkeit r unabhängig zu machen.

Wie beim Einspurmodell üblich, werden die beiden Vorderräder zu einem Rad in der Fahrzeugmitte zusammengefaßt. Fig.3 zeigt dieses Rad sowie Kräfte und Winkel am Rad. In Fig.3 ist mit $F_{sF}$ die Seitenkraft des Rades bezeichnet, welche eine nur sehr ungenau bekannte Funktion des Schräglaufwinkels $\alpha_F$ ist. Mit $F_{\ell F}$ ist die Längskraft des Reifens bezeichnet, die von der Bremse und bei Vorderradantrieb auch von der Gaspedalstellung abhängt. Die Seitenkraft $F_{yF}$ an der Vorderachse ist damit

$$F_{yF} = F_{sF}(\alpha_F)\cos\delta_F + F_{\ell F}\sin\delta_F$$

Werden nunmehr kleine Lenkwinkel $\delta_F$ angenommen, so wird näherungweise

$$F_{yF} = F_{sF}(\alpha_F) \tag{6}$$

Im Rahmen dieser Annäherung wird das Ziel der Entkopplung der Seitenkraft $F_{yF}$ von der Giergeschwindigkeit r erreicht, wenn es gelingt, den Schräglaufwinkel $\alpha_F$ von der Giergeschwindigkeit r unabhängig zu machen. Fig.3 illustriert diesen Zusammenhang

$$\alpha_F = \delta_F - \beta_F \tag{7}$$

wobei mit $\beta_F$ der Schwimmwinkel an der Vorderachse bezeichnet ist.

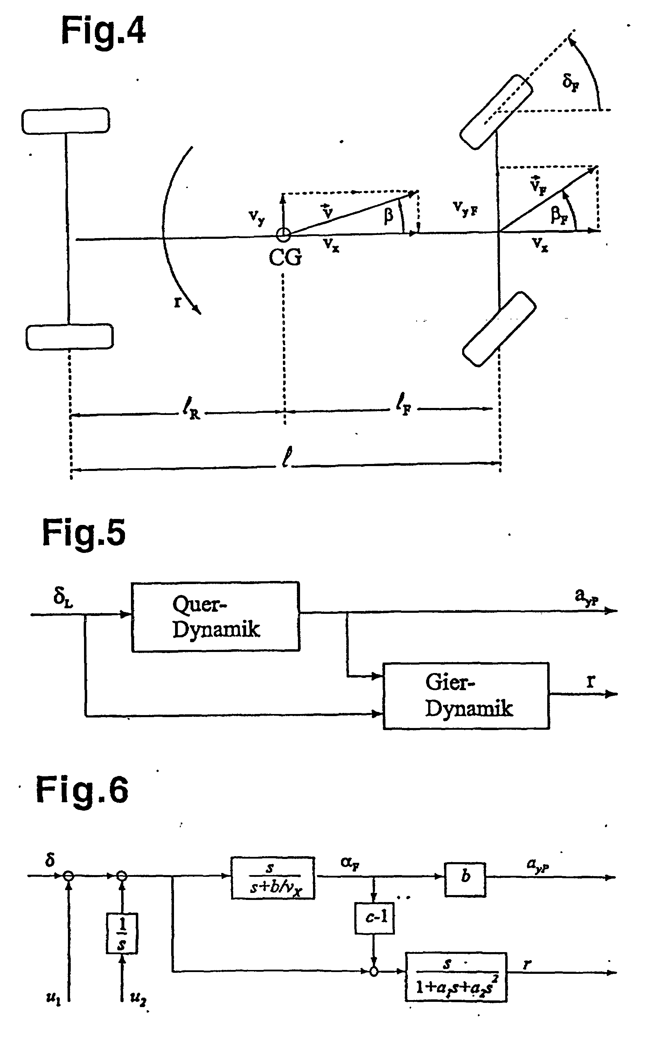

In Fig.4 ist der Zusammenhang zwischen den bisher verwendeten Größen, nämlich den Geschwindigkeitsvektoren und dem Schwimmwinkel dargestellt. Hierbei gilt

$$\tan\beta_F = \frac{\upsilon_{yF}}{\upsilon_x} \tag{8}$$

mit $v_{yF}=v_y+\ell_F r$.

Um in den Gln. (1) und (2) die unbekannten Kräfte und die unbekannte Masse durch meßbare Größen zu ersetzen, werden zunächst die möglichen Meßgrößen analysiert. An Messungen mit preiswerten Sensoren steht zur Verfügung

1. die Giergeschwindigkeit r, die mit einem Drehratensensor gemessen wird;
2. die Fahrgeschwindigkeit $v_x$, die von ABS-Sensoren erhalten wird;
3. die Längsbeschleunigung $a_x = (F_x + F_{xD})/m$;
4. die Querbeschleunigung $a_y$, beispielsweise am Schwerpunkt CG als $a_y = (F_y + F_{yD})/m$. Durch Interpolation zwischen den Messungen von zwei Beschleunigungsmessern, welche in Querrichtung vorn und hinten eingebaut sind, kann die Querbeschleunigung an jeder gewünschten Stelle berechnet werden;
5. der Lenkradwinkel, der beispielsweise mittels eines Potentiometers oder eines kapazitiven Abgriffs erhalten wird.

Aufwendig ist dagegen die Messung der Geschwindigkeitskomponente $v_y$ in der y-Richtung, bzw. des damit zusammenhängenden Schwimmwinkels $\beta$ ($\tan\beta = v_y/v_x$). Der Schwimmwinkel $\beta$ kann jedoch auch aus anderen Meßgrößen durch einen Beobachter, d.h. eine Berechnungsvorschrift rekonstruiert werden, mit der im Regler eine nicht gemessene Größe aus Meßgrößen rekonstruiert wird. (Siehe A.Th. van Zanten u.a. an der angegebenen Stelle).

Die unsicheren Größen m, $F_x$, $F_{xD}$, $F_y$ und $F_{yD}$ in den Gln. (1) und (2) werden nunmehr durch die meßbaren Beschleunigungen ersetzt.

$$\dot{v}_x = a_x + r v_y \tag{9}$$

$$\dot{v}_y = a_y - r v_x \tag{10}$$

Zur Herleitung des Regelgesetzes, das den Schräglaufwinkel $\alpha_F$ von der Giergeschwindigkeit r unabhängig macht, werden beide Seiten von Gl.(8) differenziert:

$$\frac{\dot{\beta}_F}{\cos^2 \beta_F} = \frac{\dot{v}_{yF} v_x - v_{yF} \dot{v}_x}{v_x^2} \tag{11}$$

Mit $\dot{v}_{yF}=\dot{v}_y+\ell_F\dot{r}$ ist darin $\dot{v}_{yF} = \dot{v}\ell_F\dot{r}$. Die Geschwindigkeiten $\dot{v}_x$ und $\dot{v}_y$ werden gemäß den Gln. (9) und (10) eingesetzt.

$$\frac{\dot{\beta}_F}{\cos^2 \beta_F} = \frac{a_y v_x - r v_x^2 + \ell_F \dot{r} v_x - v_{yF}(a_x + r v_y)}{v_x^2} \tag{12}$$

Um Vereinfachungen im Schwimmwinkel $\beta_F$ vornehmen zu können, wird der Zählerterm geschrieben als $r v_y=r(v_y+\ell_F r-\ell_F r)=r(v_{yF}-\ell_F r)$. Mit Gl. (8) und $\tan\beta_F = \sin\beta_F/\cos\beta_F$ wird aus Gl. (12)

$$\dot{\beta}_F = \frac{\cos^2 \beta_F}{v_x^2}(a_y v_x - r v_x^2 + \ell_F \dot{r} v_x - v_{yF} a_x - v_{yF}^2 r + v_{yF} \ell_F r^2)$$

$$= \cos^2 \beta_F \left(\frac{a_y}{v_x} - r + \frac{\ell_F \dot{r}}{v_x} - \frac{a_x}{v_x}\tan \beta_F - r \tan^2 \beta_F + \frac{\ell_F r^2}{v_x}\tan \beta_F\right)$$

$$= -r(\cos^2 \beta_F + \sin^2 \beta_F) + \frac{\cos \beta_F}{v_x}\left[(a_y + \ell_F \dot{r})\cos \beta_F + (\ell_F r^2 - a_x)\sin \beta_F\right]$$

$$= -r + \frac{\cos \beta_F}{v_x}\left[(a_y + \ell_F \dot{r})\cos \beta_F + (\ell_F r^2 - a_x)\sin \beta_F\right]$$

Schließlich wird mit $a_y = a_{yP} - \ell_P \dot{r}$ die zu entkoppelnde Querbeschleunigung $a_{yP}$ eingeführt:

$$\dot{\beta}_F = -r + \frac{\cos \beta_F}{v_x}\left[\left(a_{yP} + (\ell_F - \ell_P)\dot{r}\right)\cos \beta_F + (\ell_F r^2 - a_x)\sin \beta_F\right] \qquad (13)$$

Aus Gl.(7) ergibt sich nun die Differentialgleichung für den vorderen Schräglaufwinkel $\alpha_F$:

$$\dot{\alpha}_F = \dot{\delta}_F - \dot{\beta}_F = \dot{\delta}_F + r - \frac{\cos \beta_F}{v_x}\left[\left(a_{yP} + (\ell_F - \ell_P)\dot{r}\right)\cos \beta_F + (\ell_F r^2 - a_x)\sin \beta_F\right](14)$$

Nach den Gln. (5) und (6) hängt die Querbeschleunigung $a_{yP}$ nur über den Schräglaufwinkel $\alpha_F$ von der Giergeschwindigkeit r ab, nicht aber direkt von der Giergeschwindigkeit r. Die von der Giergeschwindigkeit r abhängenden Terme können durch geeignete Wahl der Differentialgleichung der Rückführung kompensiert werden.

$$\dot{\delta}_F = -r + \frac{\cos \beta_F}{v_x}\left[(\ell_F - \ell_P)\dot{r}\cos \beta_F + (\ell_F r^2 - a_x)\sin \beta_F\right] \qquad (15)$$

Um eine Division durch Null zu vermeiden, wird ein hierfür verwendeter Regler erst nach Erreichen einer Mindestgeschwindigkeit $v_{xmin}$ stoßfrei eingeschaltet. Gl.(15) gilt also auch für $v_x > v_{xmin}$. Gl.(15) und beschreibt nur den Rückführungszweig des Reglers. Der Eingriff vom Lenkradwinkel her wird später noch ergänzt. Durch die Wahl des Reglers nach Gl.(15) vereinfacht sich Gl.(14) zu

$$\dot{\alpha}_F = -\frac{\cos^2 \beta_F}{v_x}a_{yP}(\alpha_F) \qquad (16)$$

Für einen realistischen vorderen Schwimmwinkel $\beta_F$ mit $|\beta_F| < 13°$ ist $0{,}95 < \cos^2 \beta_F < 1$, so daß $\cos^2 \beta_F \approx 1$ gesetzt werden kann, d.h. die Abhängigkeit des Schwimmwinkels $\beta_F$ von der Giergeschwindigkeit r spielt nur eine untergeordnete Rolle. Für den von der Giergeschwindigkeit r entkoppelten vorderen Schräglaufwinkel $\alpha_F$ wird dann mit den Gln. (5) und (6) die Differentialgleichung erster Ordnung erhalten:

$$\dot{\alpha}_F = -\frac{1}{v_x}\left[F_{sF}(\alpha_F)\frac{\ell}{m\ell_R} + \frac{\ddot{F}_{yD}}{m} + \frac{M_{zD}}{m\ell_R}\right] \qquad (17)$$

Für die Stabilität dieses Systems muß lediglich $\alpha_F F_{sF}(\alpha_F) > 0$ vorausgesetzt werden, d.h. die Reifenkennlinie $F_{sF}(\alpha_F)$ darf nur im ersten und dritten Quadranten verlaufen, was in der Praxis erfüllt ist.

Das Rückführgesetz nach Gl.(15) stellt eine Verallgemeinerung des Regelgesetzes in DE 40 28 320 dar:

$$\dot{\delta}_F = -r \qquad (18)$$

Das Regelgesetz wurde dort unter der Annahme einer idealen Massenverteilung $\ell_F = \ell_P$ hergeleitet. Außerdem wurde dort der Term $(\ell_F r^2 - a_x)\cos\beta_F \sin\beta_F / v_x$ vernachlässigt. Mit dem erweiterten Regelgesetz nach Gl.(15) kann der Einfluß von Beschleunigungen und Verzögerungen auf die robuste einseitige Entkopplung kompensiert werden. Dazu müssen allerdings die Beschleunigung $a_x$ und die Fahrgeschwindigkeit $v_x$ gemessen werden. Der Schwimmwinkel $\beta_F$ wird, falls er nicht gemessen werden kann, in einem Beobachter rekonstruiert, wie vorstehend bereits ausgeführt ist. Die Gierbeschleunigung $\dot{r}$ erhält man entweder durch Differenzieren des Gierwinkels r oder aus zwei Querbeschleunigungsmessern $a_{y1}$ (vorn) und $a_{y2}$ (hinten), die im Abstand $\ell_a$ eingebaut werden. Dann ist:

$$\dot{r} = \frac{a_{y1} - a_{y2}}{\ell_a} \qquad (19)$$

Das Rückführgesetz nach Gl.(15) wird nun durch den Lenkungseingriff $\delta_L$ des Fahrers und zwei Eingangsgrößen $u_1$ und $u_2$ für später zu behandelnde Zusatzrückführungen erweitert. Dabei ist $\delta_L$ der bereits mit der Lenkuntersetzung auf den entsprechenden Vorderrad-Einschlag umgerechnete Lenkradwinkel. Man erhält dann das Regelgesetz:

$$\delta_F = \delta_L + (F_1\delta_L) + \delta_I + u_1$$

$$\dot{\delta}_I = (F_2\delta_L) - r + \frac{\cos\beta_F}{v_x}\left[(\ell_F - \ell_P)\dot{r}\cos\beta_F + (\ell_F r^2 - a_x)\sin\beta_F\right] + u_2 \qquad (20)$$

Die erste Zeile von Gl.(20) beschreibt, daß zur konventionellen Lenkung $\delta_F = \delta_L$ ein zusätzlicher im Regler berechneter Winkel

$$\delta_C = (F_1\delta_L) + \delta_I + u_1 \qquad (21)$$

addiert wird. Bei einem "Steer-by-Wire"-System wird die Addition $\delta_F = \delta_L + \delta_C$ im Mikroprozessor ausgeführt und ein Lenkmotor für $\delta_F$ angesteuert (siehe J. Ackermann u.a. wie oben angeführt). Aus Sicherheitsgründen ist es vorzuziehen, die mechanische Verbindung vom Lenkrad zu den Vorderrädern zu belassen und nur den Zusatzlenkwinkel $\delta_C$ über einen Lenkmotor mechanisch zu addieren. Dies kann in der Drehbewegung der Lenksäule erfolgen, beispielsweise durch ein Planetengetriebe oder in einer Linearverschiebung in der Spurstange. Wenn der Zusatzwinkel $\delta_C$ aus Sicherheitsgründen mechanisch begrenzt ist, als $|\delta_C| \leq \delta_{Cmax}$, muß dafür gesorgt werden, daß der Zusatzwinkel $\delta_C$ allenfalls kurzfristig an den Anschlag fährt, aber nicht dort bleibt. Die Integration des aus Meßwerten gebildeten $\dot{\delta}_I$ zu $\delta_I$ erfolgt im Mikroprozessor des Reglers.

$(F_1\delta_L)$ und $(F_2\delta_L)$ sind durch Vorfilter modifizierte, vom Lenkradwinkel $\delta_L$ abhängige Signale. Für $\delta_L \equiv 0$, $u_1 \equiv 0$ und $u_2 \equiv 0$ sind die Gln.(15) und (20) untereinander gleich.

Die Größe $(F_1\delta_L)$ beeinflußt das Ansprechverhalten der Lenkung, also die unmittelbare Reaktion auf einen Lenkradsprung. Im stationären Verhalten sollte $(F_1\delta_L)$ keinen Einfluß haben. Beim linearen Vorfilter $F_1(s)$ kann beispielsweise näherungsweise eine Vorhaltelenkung mit

$$F_1(s) = k_r s \tag{22}$$

realisiert werden. Das Vorfilter $F_2(s,v_x)$ ist für die stationären Werte $r_{stat}$ der Giergeschwindigkeit $r$ maßgebend, der sich aufgrund eines Lenkradwinkelsprungs nach einem Einschwingvorgang in der stationären Kreisfahrt einstellt. Seine Verstärkung sollte daher der stationären Verstärkung vom Lenkradwinkel $\delta_L$ zur Giergeschwindigkeit $r$ des konventionellen Fahrzeugs entsprechend. Dies ist der Fall für

$$F_2(0,v_x) = \frac{r_{stat}}{\delta_{Lstat}} = \frac{v_x}{\ell[1 + (v_x/v_{CH})^2]} \tag{23}$$

wobei $V_{CH}$ die "charakteristische Geschwindigkeit" ist.

Beispielsweise kann

$$F_2(s,v_x) = \frac{v_x}{\ell[1 + (v_x/v_{CH})^2]} \frac{1}{1 + T_2(v_x)s} \tag{24}$$

empirisch so bestimmt werden, daß die Gierbewegung beim Lenken möglichst sanft über einen Tiefpaß erster Ordnung mit geschwindigkeitsabhängiger Zeitkonstante $T_2(v_x)$ angeregt wird. (Siehe J. Ackermann and T. Bünte, "Handling improvement for robustly decoupled car steering dynamics", Proc. 4th IEEE Mediterranean Conference on Control and Automation, Crete, S.83 bis 88, 1996). Die günstige Einstellung der Vorfilter $F_1$ und $F_2$ eventuell in Abhängigkeit von $v_x$ und $|\delta_L|$, hängt schließlich auch von dem subjektiven Empfinden des Fahrers ab und kann daher hier nicht analytisch abgeleitet werden.

Mit der Erweiterung nach Gl.(20) des Regelgesetzes wird aus Gl.(16)

$$\dot{\alpha}_F = -\frac{\cos^2 \beta_F}{v_x} a_{yP}(\alpha_F) + \dot{\delta}_L + (\dot{F}_1 \delta_L) + (F_2 \delta_L) + \dot{u}_1 + u_2 \tag{25}$$

Die vom Lenkradwinkel $\delta_L$ abhängigen Signale werden zusammengefaßt zu einem Signal:

$$\dot{\delta} = \dot{\delta}_L + (\dot{F}_1 \delta_L) + (F_2 \delta_L) \tag{26}$$

Die in einem geregelten Fahrzeug auftretenden Wirkungen sind in Fig.5 illustriert. Hierbei wird die Querdynamik mit der Zustandsgröße $\alpha_F$ durch die Differentialgleichung (17) erster Ordnung beschrieben. (Die externen Störgrößen $F_{yD}$ und $M_{zD}$ sind in Fig.5 weggelassen). Die Gierdynamik mit den Zustandsgrößen $r$ nach Gl.(3) und $\delta_l$ nach Gl.(20) ist von zweiter Ordnung. (Genau genommen besteht durch die bremsende Wirkung des Lenkens noch eine schwache Kopplung zu der Differentialgleichung (1) für $v_x$). In Fig.5 ist das Ergebnis gezeigt, daß nämlich die Größe $r$ nicht von $a_{yP}$ (das seinerseits direkt mit dem Schräglaufwinkel $\alpha_F$ zusammenhängt) aus beobachtbar ist. Diese Eigenschaft ist robust gegenüber unbekannten Kräften zwischen Reifen und Straße. Weiterhin ist sie durch eine Messung und eine Regleranpassung mit $v_x$ robust gegenüber der Fahrgeschwindigkeit. Schließlich ist sie robust gegenüber der Fahrzeugzuladung, solange das Verhältnis $J = m\ell_R\ell_P$ nicht verändert wird.

Für andere Lastverteilungen, beispielsweise für eine schwere hecklastige Beladung eines leichten Kombiwagens), ist eine Bestimmung von $\ell_P$ im Regler sinnvoll. Die Länge $\ell_P$ hängt nach Gl.(4) nur von der Lastverteilung des Fahrzeugs, nicht aber vom Reifenkraftschluß und von der Geschwindigkeit ab. Änderungen der Länge $\ell_P$ erfolgen daher nicht während der Fahrt (wenn man von der Änderung der Masse $m$ und dem Trägheitsmoment $J$ durch Benzinverbrauch absieht); der Abstand $\ell_P$ vom Schwerpunkt braucht nur bei Fahrtantritt aufgrund der aktuellen Fahrzeugbeladung nachgestellt zu werden. Ausgehend von der nominalen Grundeinstellung $m_0$, $J_0$, $\ell_{P0} = J_0/m_0\ell_{R0}$ für das Fahrzeug mit Fahrer bewirkt eine Zuladung $m_L$ in einem Abstand $\ell_L$ vor dem nominalen Schwerpunkt eine Änderung der Schwerpunktlage von $\ell_R$ in $\ell_{R0} + d$ mit $d = m_L\ell_L/(m_0 + m_L)$ und nach dem Steiner' schen Satz ein Trägheitsmoment bezogen auf die neue Schwerpunktlage von

$$J = m_0 \ell_{R0} \ell_{10} + m_L(\ell_L - d)^2 + m_0 d^2 \tag{27}$$

Damit kann $\ell_P = J/m\ell_P$ berechnet und im Regler eingestellt werden. Die Zusatzlast $m_L$ und ihre Position $\ell_L$ kann beispielsweise bei Fahrtantritt, statisch aus den Auslenkungen der Fahrzeugfederung ermittelt werden.

Mit der robusten einseitigen Entkopplung sind die eingangs angeführten Aufgaben des Fahrers, nämlich "Spurführung" und "Gierstabilisierung" in dem Sinne sauber von einander getrennt, daß beim geregelten Fahrzeug dem Fahrer nur noch die vereinfachte Aufgabe der Spurführung über die Querbeschleunigung $a_{yP}$ bleibt, während das Regelsystem die Gierbewegung automatisch regelt. Ausgehend von dieser idealen Entkopplung der beiden Teilsysteme sollen sie nun einzeln - mit möglichst geringen Kompromissen bezüglich der idealen Entkopplung - in ihrer Dynamik verbessert werden. Beim Teilsystem Querdynamik geht es dabei um eine schnelle Fahrzeugreaktion auf Lenkkommandos, bei der Gierdynamik um eine Verbesserung der Dämpfung bei hoher Fahrgeschwindigkeit.

Für das Gesamtsystem einschließlich Fahrer geht es schließlich darum, die automatischen Lenkeingriffe nur kurzfristig nach dem Auftreten eines Gier-Störmoments oder einer Lenkbewegung zur Überbrückung der Reaktionszeit des Fahrers auszuführen, dann aber die volle Lenkautorität rasch wieder an den Fahrer zurückzuübertragen, so daß er zwar eine schnelle Unterstützung bekommt, aber für das normale Fahren nicht umlernen muß.

Die Untersuchungen der beiden einseitig entkoppelten Systeme werden an einem vereinfachten linearen Modell vorgenommen. Hierzu werden die äußeren Störgrößen $F_{yD}$ und $M_{zD}$ Null gesetzt, da sie keinen Einfluß auf die Eigenwerte der linearisierten Quer- und Gierdynamik haben. Ferner werden kleine Schwimmwinkel $\beta_F$ angenommen, d.h. $\cos^2 \beta_F = 1$ gesetzt, und die Reifenkennlinien werden mit Hilfe der Schräglaufsteifigkeiten vorn ($c_F$) und hinten ($c_R$) linearisiert, also

$$F_{sF}(\alpha_F) = c_F\alpha_F, \; F_{sR} = c_R\alpha_R \tag{28}$$

Dann ist mit den Gl. (5) und (6)

$$a_{yP} = \frac{c_F\ell}{m\ell_R} \, \alpha_F \tag{29}$$

und aus Gln. (25) und (26) wird

$$\dot{\alpha}_F = -\frac{1}{\upsilon_x} \, a_{yP}(\alpha_F) + \dot{\delta} + \dot{u}_1 + u_2 \tag{30}$$

Durch Einsetzen von Gl. (29) wird

$$\dot{\alpha}_F = -\frac{c_F\ell}{m\ell_R\upsilon_x} \, \alpha_F + \dot{\delta} + \dot{u}_1 + u_2 \tag{31}$$

und im Laplace-Bereich erhalten:

$$\left(s + \frac{c_F\ell}{m\ell_R\upsilon_x}\right)\alpha_F(s) = s\delta(s) + su_1(s) + u_2(s) \tag{32}$$

Mit der Abkürzung

$$b = c_F\ell/m\ell_R \tag{33}$$

folgt daraus

$$(s+b/\upsilon_x)\alpha_F(s) = s\delta(s) + su_1(s) + u_2(s) \tag{34}$$

$$\alpha_F(s) = \frac{1}{s + b/\upsilon_x} \left[ s\delta(s) + su_1(s) + u_2(s) \right] \tag{35}$$

$$a_{yP}(s) = b\alpha_F(s) \tag{36}$$

und zusammengefaßt

$$a_{yP}(s) = \frac{b}{s + b/\upsilon_x} \left[ s\delta(s) + su_1(s) + u_2(s) \right] \tag{37}$$

Die Gl.(37) beschreibt das in Fig.5 mit "Querdynamik" bezeichnete Teilsystem. Es ist bei Vorwärtsfahrt ($v_x >$ 0) stabil mit einem reellen Eigenwert bei -b/$v_x$.

Das Teilsystem "Gierdynamik" setzt sich aus der Differentialgleichung (3) für die Giergeschwindigkeit r und der Regler-Differentialgleichung (20) mit der Zusatzgröße $\delta_I$ zusammen. Letztere wird durch Vernachlässigung von Beschleunigungsvorgängen mit ($\ell_F r^2 - a_x$)cos$\beta_F$sin$\beta_F$/$v_x$=0 linearisiert, und die Geschwindigkeitskomponente $v_x$ wird als konstant angenommen. Damit ist

$$\delta_F = \delta_L + (F_1\delta_L) + \delta_I + u_1$$

$$\dot{\delta}_I = (F_2\delta_L) - r + \frac{\ell_F - \ell_P}{\upsilon_x}\dot{r} + u_2 \tag{38}$$

bzw. im Laplace-Bereich mit linear angenommenen Vorfiltern $F_1$(s) und $F_2$(s)

$$s\delta_F(s) = [s + sF_1(s) + F_2(s)]\delta_L(s) + \left(-1 + \frac{\ell_F - \ell_P}{v_x}s\right)r(s) + su_1(s) + u_2(s) \tag{39}$$

und in der zusammenfassenden Schreibweise von Gl.(26) ergibt sich:

$$s\delta_F(s) = -\left(1 - \frac{\ell_F - \ell_P}{v_x}s\right)r(s) + s\delta(s) + su_1(s) + u_2(s) \tag{40}$$

Hinzu kommt die linearisierte und störungsfreie Form von Gl.(3) als

$$J\dot{r} = M_z$$

$$m\ell_R\ell_P\dot{r} = \ell_F c_F\alpha_F - \ell_R c_R\alpha_R \tag{41}$$

Der hintere Schräglaufwinkel $\alpha_R$ ist

$$\alpha_R = -\beta_R = -\beta_F + \frac{\ell_.}{\upsilon_x}r$$

und mit Gl.(7)

$$\alpha_R = \alpha_F - \delta_F + \frac{\ell}{\upsilon_x}\, r \tag{42}$$

Damit wird aus Gl. (41) im Laplace-Bereich

$$m\ell_R\ell_P sr(s) = -(\ell_R c_R - \ell_F c_F)\alpha_F(s) + \ell_R c_R \delta_F(s) - \frac{\ell\ell_R c_R}{v_x}r(s)$$

Diese Gleichung wird auf beiden Seiten mit s multipliziert und $s\delta_F(s)$ nach Gl.(40) eingesetzt

$$m\ell_R\ell_P s^2 r(s) = -(\ell_R c_R - \ell_F c_F)s\alpha_F(s) - \ell_R c_R\left(1 - \frac{\ell_F - \ell_P}{v_x}s\right)r(s)$$
$$+ \ell_R c_R[s\delta(s) + su_1(s) + u_2(s)] - \frac{\ell\ell_R c_R}{v_x}sr(s)$$

wobei $\ell = \ell_R + \ell_F$

$$\left[m\ell_R\ell_P s^2 + \frac{\ell_R c_R}{v_x}(\ell_R + \ell_P)s + \ell_R c_R\right]r(s) =$$
$$-(\ell_R c_R - \ell_F c_F)s\alpha_F(s) + \ell_R c_R[s\delta(s) + su_1(s) + u_2(s)]$$

Die Division beider Seiten durch $\ell_R c_R$ führt auf

$$\left[\frac{m\ell_P}{c_R}s^2 + \frac{\ell_R + \ell_P}{v_x}s + 1\right]r(s) = \left(-1 + \frac{\ell_F c_F}{\ell_R c_R}\right)s\alpha_F(s) + s\delta(s) + su_1(s) + u_2(s) \tag{43}$$

Mit den Abkürzungen $a_2 = m\ell_P/c_R$, $a_1 = (\ell_R+\ell_P)/v_x$ und $c = \ell_F c_F/\ell_R c_R$, ergibt sich aus Gl.(43)

$$(1 + a_1 s + a_2 s^2)r(s) = (-1+c)s\alpha_F(s) + s\delta(s) + su_1(s) + u_2(s) \tag{44}$$

$$r(s) = \frac{(-1 + c)s}{1 + a_1 s + a_2 s^2}\alpha_F(s) + \frac{1}{1 + a_1 s + a_2 s^2}[s\delta(s) + su_1(s) + u_2(s)] \tag{45}$$

und mit $\alpha_F(s)$ nach Gl. (34)

$$r(s) = \frac{s(cs + b/\upsilon_x)}{(1 + a_1 s + a_2 s^2)(s + b/\upsilon_x)}[\delta(s) + u_1(s) + u_2(s)/s] \tag{46}$$

Die Verbindung der beiden linearisierten Teilsysteme (35) und (45) ist in Fig.6 dargestellt.

Der Eigenwert der Querdynamik nach Gl.(37) liegt bei s = -b/$v_x$ = -$c_F \ell/m \ell_R v_x$. Es kann erwünscht sein, seine Dynamik zu beschleunigen, d.h. den Eigenwert weiter nach links zu schieben. Nachdem die Querdynamik durch robuste Entkopplung nicht mehr von der Gierdynamik abhängt, kann sie durch Rückführung von $a_{yP}$ auf u im Rahmen der durch den Lenkmotor gegebenen Beschränkungen schneller gemacht werden, ohne daß dies einen Einfluß auf die Gierdynamik hat.

Es wird also folgende Rückführung angesetzt:

$$u_2(s) = k_Q[\upsilon_x F_2(s)\delta_L(s) - a_{yP}(s)] \tag{47}$$

Zusammen mit Gl.(37 ergit sich:

$$a_{yP}(s) = \frac{b}{s + b/v_x}[s\delta(s) + su_1(s) + k_Q(v_x F_2(s)\delta_L(s) - a_{yP}(s))]$$

$$a_{yP}(s)\left[s + b\left(\frac{1}{v_x} + k_Q\right)\right] = b[s\delta(s) + su_1(s) + k_Q v_x F_2(s)\delta_L(s)] \tag{48}$$

Abhängig von der Wahl des Reglerparameters $k_Q$ liegt der Eigenwert bei

$$s_Q = -b\left(\frac{1}{v_x} + k_Q\right) = -\frac{c_F \ell}{m \ell_R}\left(\frac{1}{v_x} + k_Q\right) \tag{49}$$

In DE 43 07 420 wurde beispielsweise ein der Geschwindigkeit $v_x$ angepaßter Regler

$$k_Q(\upsilon_x) = -\frac{1}{\upsilon_x} + k_P \tag{50}$$

zur Erzielung einer geschwindigkeitsunabhängigen Querdynamik mit dem Eigenwert

$$s_Q = -c_F \ell k_P/m \ell_R \tag{51}$$

angegeben. Es kann nur ab einer Mindestgeschwindigkeit $v_{xmin}$ eingeschaltet werden, d.h. für $v_x \geqq v_{min}$.

In der linearisierten Darstellung des zweiten Teilsystems "Gierdämpfung" nach Fig.6 kann die natürliche Frequenz $\omega_{dec}$ in die Gierdämpfung $D_{dec}$ des entkoppelten Systems durch Gleichsetzen von

$$1 + a_1 \dot{s} + a_2 s^2 = 1 + \frac{2D_{dec}}{\omega_{dec}} s + \frac{1}{\omega_{dec}^2}s^2 \tag{52}$$

bestimmt werden zu

$$\omega_{dec} = \sqrt{\frac{1}{a_2}} = \sqrt{\frac{c_R}{m \ell_P}} \tag{53}$$

$$D_{dec} = \frac{\omega_{dec} a_1}{2} = \frac{\ell_R + \ell_P}{2\upsilon_x} \sqrt{\frac{c_R}{m\ell_P}} \tag{54}$$

Für die ideale Massenverteilung $\ell_P = \ell_F$ wurden die Werte bereits hergeleitet und es wurde gezeigt, daß die Dämpfung des einseitig entkoppelten Fahrzeugs für hohe Geschwindigkeiten $v_x$ geringer ist als die des konventionellen Fahrzeugs; dies kann zu einer ungenügenden Gierstabilität führen.

Zur Lösung dieser Schwierigkeit bietet sich ein Kompromiß derart an, daß die Vorteile der idealen Entkopplung bis zu einer Geschwindigkeit $v_{xE}$ voll ausgenutzt werden, während für $v_x > v_{xE}$ eine Rückführung von r nach $u_1$ oder $u_2$ sanft zugeschaltet wird, was zwar die Entkopplung etwas beeinträchtigt, aber gezielt die Gierdämpfung verbessert. Bei einem allgemeinen Ansatz dieser Rückführung würde die durch Entkopplung erreichte, robuste Faktorisierung des charakteristischen Polynoms in $(s+b/v_x)$ $(1+a_1 s+a_2 s^2)$ zerstört, so daß sich die Gierdämpfung nur noch numerisch für zahlenmäßig bestimmte Fahrzeugdaten ermitteln ließe. Die Rückführung wird deshalb so angesetzt, daß sie den Term $s+b/v_x$ kürzt. Der Einfachheit halber wird keine Veränderung der Gierdynamik, also $k_Q = 0$, angenommen.

Der Term $b = c_F \ell/m\ell_R$ ist unsicher. Bei der Kürzung ist von dem ungünstigsten Fall einer rutschigen Straße (kleines $c_F$) und einer vollen Beladung (einer großen Masse m) ausgegangen. Für diesen Fall ist die Kürzung dann exakt, während bei günstigeren Werten die Nullstelle unverändert ist, der Pol aber weiter nach links wandert, so daß ein kleiner, durchaus erwünschter Phasenvorhalt entsteht. Im folgend wird von einer exakten Kürzung ausgegangen. Die Geschwindigkeit $v_x$ kann beispielsweise mit Hilfe der ABS-Sensoren gemessen und zur Verstärkungsanpassung im Regler benutzt werden.

Ein Term $(s+b/v_x)r(s)$ bzw. im Zeitbereich $\dot{r}(t) + \frac{b}{v_x} r(t)$ kann mit Hilfe des Gierratensensors für die Giergeschwindigkeit r und zwei Querbeschleunigungsmessern gemäß Gl.(19) erzeugt werden. Über eine geschwindigkeitsabängige Rückführung kann er nach $u_1(t)$ bzw. $u_2(t)$ zurückgeführt werden. Schließlich kann er auch zur Einsparung der beiden Beschleunigungsmesser mit einer Kombination beider Eingänge $u_1$ und $u_2$ erzeugt werden. Alle drei Varianten werden im folgenden analysiert.

a) Rückführung nach $u_1$

$$u_1 = -k_{D1}(s + b/\upsilon_x)r(s) \tag{55}$$

Durch Einsetzen in Gl.(34) mit $u_2(s)=0$ ergibt sich

$$(s + b/\upsilon_x)\alpha_F(s) = s\delta(s) - k_{D1}(s + b/\upsilon_x)sr(s)$$

Dieser Ausdruck für $\alpha_F(s)$ sowie $u_1$ nach Gl.(55) wird in Gl. (44) eingesetzt:

$$(1 + a_1 s + a_2 s^2)r(s) = (-1 + c)\frac{s^2}{s + b/v_x}\delta(s) \quad - \quad (-1 + c)k_{D1}s^2 r(s) + s\delta(s)$$
$$- \quad k_{D1}(s + b/v_x)sr(s) \tag{56}$$

$$[1 + (a_1 + k_{D1}b/\upsilon_x)s + (a_2 + ck_{D1})s^2]r(s) = \frac{s(cs + b/\upsilon_x)}{s + b/\upsilon_x}\delta(s) \tag{57}$$

Die natürliche Frequenz und Dämpfung werden bestimmt aus

$$1 + (a_1 + k_{D1}b/\upsilon_x)s + (a_2 + ck_{D1})s^2 = 1 + \frac{2D_1}{\omega_1}s + \frac{1}{\omega_1^2}s^2 \tag{58}$$

$$\omega_1^2 = \frac{1}{a_2 + ck_{D1}} \tag{59}$$

$$D_1^2 = \frac{(a_1 + k_{D1}b/\upsilon_x)^2}{4(a_2 + ck_{D1})} \tag{60}$$

$D_1^2$ hat eine doppelte Nullstelle für $k_{D1} = -a_1 v_x/b > 0$. Für größere Werte von $k_{D1}$ wächst $D_1^2$ an, erreicht für $k_{D1}$ = 0 den Wert $D_1^2 = a_1^2/4a_2$ (der mit $D_{dec}$ nach Gl. (53) übereinstimmt) und geht für große Werte von $k_{D1}$ linear mit $k_{D1}$ gegen Unendlich. Mit $k_{D1} > 0$ läßt sich jedoch jede gewünschte bessere Gierdämpfung einstellen.

b) Rückführung nach $u_2$

$$u_2 = -k_{D2}(s + b/\upsilon_x)r(s) \tag{61}$$

Wie in Gl: (56) wird dann erhalten:

$$(1 + a_1 s + a_2 s^2)r(s) = (-1 + c)\frac{s^2}{s + b/\upsilon_x}\delta(s) - (-1 + c)k_{D2}sr(s) + s\delta(s)$$

$$- k_{D2}(s + b/\upsilon_x)r(s)$$

$$[(1 + k_{D2}b/\upsilon_x) + (a_1 + ck_{D2})s + a_2 s^2]r(s) = \frac{s(cs + b/\upsilon_x)}{s + b/\upsilon_x}\delta(s) \tag{62}$$

Nach einer Division durch $1 + k_{D2}b/v_x$ werden $\omega_2$ und $D_2$ erhalten aus:

$$1 + \frac{a_1 + ck_{D2}}{1 + k_{D2}b/\upsilon_x}s + \frac{a_2}{1 + k_{D2}b/\upsilon_x}s^2 = 1 + \frac{2D_2}{\omega_2}s + \frac{1}{\omega_2^2}s^2 \tag{63}$$

$$\omega_2^2 = \frac{1 + k_{D2}b/\upsilon_x}{a_2} \tag{64}$$

$$D_2^2 = \frac{(a_1 + ck_{D2})^2}{4a_2(1 + k_{D2}b/\upsilon_x)} \tag{65}$$

Wiederum wird für $k_{D2} = 0$ der Wert $D_2^2 = a_1^2/4a_2$ des entkoppelten Systems erreicht. Für große $k_{D2}$ geht $D_2^2$ linear mit $k_{D2}$ gegen Unendlich. Es läßt sich wiederum jede gewünschte bessere Gierdämpfung mit $k_{D2} > 0$ einstellen.

c) Rückführung nach $u_1$ und $u_2$

$$u_1(s) = -k_{D3}r(s)$$

$$u_2(s) = -k_{D3}\frac{b}{\upsilon_x}r(s) \tag{66}$$

Durch Einsetzen in Gl.(34) ergibt sich:

$$(s + b/v_x)\alpha_F(s) = s\delta(s) - k_{D3}(s + b/v_x)r(s)$$

Die Größe $\alpha_F(s)$ wird zusammen mit Gln.(66) und (44) eingesetzt

$$(1+a_1s+a_2s^2)r(s) = \frac{(-1 + c)}{s + b/v_x} s^2\delta(s) - k_{D3}(-1 + c)sr(s) + s\delta(s)$$

$$- k_{D3}(s+b/v_x)r(s)$$

$$[(1 + k_{D3}b/v_x) + (a_1 + ck_{D3})s + a_2s^2]r(s) = \frac{s(cs + b/v_x)}{s + b/v_x}\delta(s) \tag{67}$$

Dieser Ausdruck entspricht Gl.(62), so daß sich die gleiche natürliche Frequenz $\omega_3 = \omega_2$ und die gleiche Dämpfung $D_3 = D_2$ ergibt. Ein praktischer Vorteil des Reglers nach Gl.(66) ist jedoch, daß nur die Größe r(t) zur Rückführung benötigt wird, und nicht $\dot{r}(t)$ aus Messungen mit zwei Beschleunigungsmessern ermittelt werden muß.

Bei der Rückführung nach $u_1$ nach der Variante a) wird die natürliche Frequenz $\omega_1$ durch die Gierdämpfung verkleinert. Bei der Rückführung nach den Varianten b) und c) wird die natürliche Frequenz $\omega_2$ vergrößert. Durch Einsetzen von $a_1$, $a_2$, b und c werden die Dämpfungen erhalten zu:

$$D_1^2 = \frac{\left(\dfrac{\ell_R + \ell_P}{v_x} + k_{D1}\dfrac{c_F\ell}{m\ell_R v_x}\right)^2}{4\left(\dfrac{m\ell_P}{c_R} + \dfrac{\ell_F c_F}{\ell_R c_R}k_{D1}\right)} = \frac{c_R[(\ell_R + \ell_P)m\ell_R + k_{D1}c_F\ell]^2}{4v_x^2\, m^2\ell_R^2\left(m\ell_P + \dfrac{\ell_F c_F}{\ell_R}k_{D1}\right)} \tag{68}$$

$$D_2^2 = \frac{\left(\dfrac{\ell_R + \ell_P}{v_x} + \dfrac{\ell_F c_F}{\ell_R c_R}k_{D2}\right)^2}{4\dfrac{m\ell_P}{c_R}\left(1 + k_{D2}\dfrac{c_F\ell}{m\ell_R v_x}\right)} = \frac{c_R\ell_R\left(\ell_R + \ell_P + \dfrac{\ell_F c_F}{\ell_R c_R}k_{D2}v_x\right)^2}{4v_x\ell_P(m\ell_R v_x + k_{D2}c_F\ell)} \tag{69}$$

In beiden Fällen kann eine gewünschte Geschwindigkeitsabhängigkeit der Dämpfung $D_1^2(v_x)$ bzw. $D_2^2(v_x)$ vorgegeben werden und die entsprechende quadratische Gleichung nach $k_{D1}(v_x)$ bzw. $k_{D2}(v_x)$ aufgelöst werden.

Für niedrige und mittlere Geschwindigkeiten wird $k_{D1}$ bzw. $k_{D2}$ zu Null gesetzt, um die ideale Entkopplung zu erreichen; bei $v_x = v_{xE}$ wächst $k_{D1}$ bzw. $k_{D2}$ dann von Null aus zu positiven Werten.

$$k_{Di} = \begin{cases} 0 & \text{für} \quad v_x < v_{xE} \\ k_{Di}(v_x) \geq 0 & \text{für} \quad v_x \geq v_{xE} \end{cases} \tag{70}$$

mit $k_{Di}(V_{xE}) = 0$.

Im Regler nach Gl.(20) wird zu dem konventionellen Lenkkommando $\delta_L$ ein im Rechner berechneter Winkel $\delta_C$ über einen Lenkmotor addiert. Aufgabe des Korrekturwinkels $\delta_C$ ist eine schnelle Fahrunterstützung bei unerwarteten Gierbewegungen. In der stationären Geradeaus- oder Kurvenfahrt sollte der Winkel $\delta_C$ dagegen auf Null zurückgehen, so daß der Fahrer mit $\delta_F = \delta_L$ das gewohnte stationäre Verhalten des Fahrzeugs empfindet. Zu diesem Zweck wurde der Integrator 1/s im Regler nach Gl.(20) durch einen sogenannten "Kurzzeit-Integrator" mit der Übertragungsfunktion

$$KI(s) = \frac{s}{s^2 + d_1 s + d_0} \tag{71}$$

ersetzt, dessen Parameter $d_0$ und $d_1$ so gewählt werden, daß sich die Sprungantwort nur für 0,5 bis 1 Sekunde ähnlich wie ein Integrator verhält, dann aber gut gedämpft auf Null zurückgeht. Auch diese Variante kann mit dem verallgemeinerten Regler nach Gl.(20) kombiniert werden.

**Patentansprüche**

1. Verfahren zur Lenkunterstützung des Fahrers eines Straßenfahrzeugs durch Berechnen eines Zusatzwinkels und durch dessen Addition zu einem vom Fahrer kommandierten Rad-Einschlagwinkel, wobei

das Straßenfahrzeug einen Radstand ($\ell$), Schwerpunktabstände ($\ell_F$) von der Vorderachse und ($\ell_R$) von der Hinterachse, eine Masse (m), ein Trägheitsmoment (J) um die Hochachse durch den Schwerpunkt (CG) und eine Lenkübersetzung ($i_L$) hat, und bei dem Verfahren
eine Giergeschwindigkeit (r) um die Hochachse mittels eines Gierratensensors gemessen wird,
eine Fahrgeschwindigkeit ($v_x$) über ABS-Sensoren bestimmt wird,
ein Lenkradwinkel ($\delta_H$)
mit einem Sensor an der Fahrzeug-Lenkachse gemessen wird,
ein vom Fahrer kommandierter Rad-Einschlagwinkel ($\delta_L$) berechnet wird,
ein Schwimmwinkel ($\beta_F$) an der Vorderachse nach dem bekannten Beobachterverfahren berechnet wird, **dadurch gekennzeichnet, daß**
zusätzlich eine Beschleunigung ($a_x$) in Fahrtrichtung mittels eines Beschleunigungsmessers gemessen wird;
eine Beschleunigung in Querrichtung an zwei beliebigen Stellen im Abstand ($\ell_a$) als ($a_{y1}$, vorne) und ($a_{y2}$, hinten) mittels zwei Beschleunigungsmessern gemessen wird, und
aus diesen Meßgrößen in einen Mikroprozessor gemäß der Differentialgleichung

$$\frac{d}{dt}\delta_I \;=\; F_2(\delta_L) - r + \frac{\cos\beta_F}{v_x}\left[(\ell_F - \ell_P)\frac{a_{y1} - a_{y2}}{\ell_a}\cos\beta_F + (\ell_F r^2 - a_x)\sin\beta_F\right] + u_2$$

$$\delta_C = F_1(\delta_L) + \delta_I + u_1$$

$$\delta_L = \frac{\delta_H}{i_L}\,,\; \ell_P = \frac{J}{m\ell_R}$$

$$u_1 = 0\,,\; u_2 = 0$$

der Zusatzlenkwinkel ($\delta_C$) berechnet wird und durch dessen Addition zu dem vom Fahrer kommandierten Rad-Einschlagwinkel ($\delta_L$) der gesamte Rad-Einschlagwinkel ($\delta_F$) erhalten wird, wobei mit $\delta_I$ der rechnerinterne Reglerzustand bezeichnet ist, mit $u_1$ und mit $u_2$ Rückführgrößen und mit $F_1(\delta_L)$ und mit $F_2(\delta_L)$ von dem Rad-Einstschlagwinkel ($\delta_L$) abhängige Vorfilter bezeichnet sind.

2. Verfahren nach Anspruch 1, **dadurch gekennzeichnet, daß** zur vereinfachten Ausführung der Zusatzlenkwinkel ($\delta_C$) über die Differentialgleichung

$$\frac{d}{dt}\delta_I = F_2(\delta_L) - r + u_2$$

$$\delta_C = F_1(\delta_L) + \delta_I + \frac{\ell_F - \ell_P}{v_x} r + u_1$$

$$u_1 = 0 \, , \, u_2 = 0$$

berechnet wird.

**3.** Verfahren nach Anspruch 1 oder 2, **dadurch gekennzeichnet, daß** die von der Massenverteilung abhängige Größe ($L_P$) vor einem Fahrtbeginn bestimmt und als aktueller Wert in den Rechner eingegeben wird.

**4.** Verfahren nach einem der Ansprüche 1 oder 2, **dadurch gekennzeichnet, daß** zur Verbesserung einer Querdynamik eine Rückführung

$$u_2 = \left( -\frac{1}{v_x} + k_P \right)\left[ v_x F_2(\delta_L) - a_{yP} \right]$$

hinzugefügt wird, wobei der Reglerparameter ($k_P$) so gewählt wird, daß das Fahrzeug schnell genug auf Lenkkommandos reagiert.

**5.** Verfahren nach einem der Ansprüche 1 oder 2, **dadurch gekennzeichnet, daß** zu dem Zusatzlenkwinkel ($\delta_C$) eine Rückführung ($u_1$), nämlich

$$u_1 = -k_{D1}(v_x) \left[ \frac{a_{y1} - a_{y2}}{\ell_a} + \frac{b}{v_x} r \right]$$

addiert wird, wobei $b = C_F L/mL_R$ ist, und mit $c_F$ eine vordere Schräglaufsteifigkeit bezeichnet ist, und $k_{D1}(v_x)$ ein von der Fahrgeschwindigkeit ($v_x$) abhängiger Reglerparameter ist und wobei ein Zusammenhang zwischen dem Reglerparameter ($k_{D1}(v_x)$) und einer Gierdämpfung ($D(v_x)$) gegeben ist durch

$$D^2(v_x) = \frac{c_R\left[ (\ell_R + \ell_P)m\ell_R + k_{D1}c_F\ell \right]^2}{4v_x^2 m^2 \ell_R^2 \left( m\ell_P + \frac{\ell_F c_F}{\ell_R}k_{D1} \right)}$$

wobei $c_R$ eine hintere Schräglaufsteifigkeit ist.

**6.** Verfahren nach einem der Ansprüche 1 oder 2, **dadurch gekennzeichnet, daß** zu dem Zusatzlenkwinkel ($\delta_C$) statt der Rückführung $u_1$ eine Rückführung $u'_1$ und zu der Differentialgleichung $d\delta_I/\delta t$ eine Rückführung $u_2$ addiert wird,

$$u_1 = -k_{D2}(v_x)r$$

$$u_2 = -k_{D2}(v_x)\frac{b}{v_x}r$$

wobei $b = c_F(L/L_R)$ ist, mit $c_F$ eine vordere Schräglaufsteifigkeit bezeichnet ist, und $k_{D2}(v_x)$ eine von der Fahrgeschwindigkeit ($v_x$) abhängige Reglerverstärkung ist, und wobei ein Zusammenhang zwischen der Reglerverstärkung ($k_{D2}(v_x)$) und der Gierdämpfung ($D(v_x)$) gegeben ist durch

$$D^2(v_x) = \frac{c_R\ell_R\left(\ell_R + \ell_P + \frac{\ell_F c_F}{\ell_R c_R}k_{D2}\upsilon_x\right)^2}{4\upsilon_x\ell_P(m\ell_R\upsilon_x + k_{D2}c_F\ell)}$$

**7.** Verfahren nach einem der Ansprüche 1 oder 2, **dadurch gekennzeichnet, daß** ein Vorfilter mit der Übertragungs-funktion

$$F_2(s,\upsilon_x) = \frac{\upsilon_x}{\ell[1 + (\upsilon_x/\upsilon_{CH})^2]}\frac{1}{1 + T_2(\upsilon_x)s}$$

gewählt wird, wobei $v_{CH}$ die charakteristische Geschwindigkeit ist und die Zeitkonstante ($T_2(v_x)$) des Vorfilters als Funktion der Geschwindigkeit ($v_x$) so bestimmt wird, daß die Gierbewegung beim Lenken nur sanft angeregt wird.

**8.** Verfahren nach den Ansprüchen 1 bis 6, **dadurch gekennzeichnet, daß** der im Regelgesetz nach Anspruch 1 oder 2 enthaltene Integrator (Übertragungsfunktion 1/s) durch einen "Kurzzeit-Integrator" mit einer Übertragungs-funktion

$$\frac{s}{s^2 + d_1 s + d_0}$$

ersetzt wird, dessen Parameter $d_1$ bis $d_2$ so zu wählen sind, daß sich eine Sprungantwort für 0,5 bis 1 s ähnlich wie ein Integrator verhält, dann aber gut gedämpft auf Null zurückgeht.

**Claims**

**1.** A method for steering support of a road-vehicle driver by computing a supplemental angle and by the addition thereof to a wheel angle of lock controlled by the driver, the vehicle having a wheelbase ($\ell$), a center of gravity disposed a distance ($\ell_F$) from the front axle and a distance ($\ell_R$) from the rear axle, a mass (m), a moment of inertia (J) around a vertical axis through the center of gravity (CG), and a steering gear ratio ($i_L$), the method comprising

measuring a yaw velocity (r) around the vertical axis by means of a yaw rate sensor; determining a driving speed ($v_x$) via ABS sensors;
measuring a steering wheel angle ($\delta_H$) by means of a sensor on a steering column of the vehicle,
computing a wheel angle of lock ($\delta_L$) controlled by the driver,
computing a variable angle ($\beta_F$) at the front axle according to the known observer method, **characterized by**
additionally measuring an acceleration ($a_x$) in the driving direction by means of an accelerometer,
measuring a lateral acceleration by means of two accelerometers disposed at two randomly selected locations at a distance ($\ell_a$) as ($a_{y1}$, front) and ($a_{y2}$, rear), and
computing a supplemental steering anlge in a microprocessor according to the differential equation

$$\frac{d}{dt}\partial = F_2(\delta_L) - r + \frac{\cos\beta_F}{v_x}\left[(\ell_F - \ell_P)\frac{a_{y1} - a_{y2}}{\ell_a}\cos\beta_F + (\ell_F r^2 - a_x)\sin\beta_F\right] + u_2$$

$$\delta_C = F_1(\delta_L) + \delta_I + u_1$$

$$\delta_L = \frac{\delta_H}{i_L}; \; \ell_P = \frac{J}{m\ell_R}$$

$$u_1 = 0 \text{ , } u_2 = 0$$

where, when the supplemental steering angle ($\delta_C$) is added to the wheel angle ($\delta_L$) controlled by the driver, the overall wheel angle of lock ($\delta_F$) results, where $\delta_1$ denotes a computer-internal controller state, where $u_1$ and $u_2$ denote feedback parameters, and where $F_1(\delta_L)$ and $F_2(\delta_L)$ denote prefilters which are dependent on the wheel angle of lock ($\delta_L$).

2. The method according to claim 1, **characterized in that** for a simplified implementation the supplemental steering angle ($\delta_C$) is computed via the differential equation

$$\frac{d}{dt}\delta_I = F_2(\delta_L) - r + u_2$$

$$\delta_C = F_1(\delta_L) + \delta_I + \frac{\ell_F - \ell_P}{v_x} r + u_1$$

$$u_1 = 0 \text{ , } u_2 = 0$$

3. The method according to claim 1 or claim 2, **characterized in that** a parameter ($\ell_P$) which is dependent on the mass distribution and is determined prior the beginning of a drive, is entered into the microprocessor as a current value.

4. The method according to one of the claims 1 or 2, **characterized in that** to improve the lateral dynamics the feedback parameter ($u_2$) is added defined by

$$u_2 = \left(-\frac{1}{v_x} + k_P\right)\left[v_x F_2(\delta_L) - a_{yP}\right]$$

where a controller parameter ($k_P$) is selected to result in a sufficiently fast vehicle response to steering commands.

5. The method according to one of the claims 1 or 2, **characterized in that** a feedback parameter ($u_1$) defined by

$$u_1 = -k_{D1}(v_x)\left[\frac{a_{y1} - a_{y2}}{\ell_a} + \frac{b}{v_x}r\right]$$

is added to the supplemental steering angle ($\delta_C$), where $b = c_F \ell/m\ell_R$, $c_F$ denotes a frontal tire slip stiffness, and ($k_{D1}(v_x)$) denotes a controller parameter which is dependent on the driving speed ($v_x$), and wherein a correlation exists between the controller parameter ($k_{D1}(v_x)$) and a yaw damping ($D(v_x)$) through

$$D^2(v_x) = \frac{c_R\left[(\ell_R + \ell_P)m\ell_R + k_{D1}c_F\ell\right]^2}{4v_x^2 m^2 \ell_R^2\left(m\ell_P + \frac{\ell_F c_F}{\ell_R}k_{D1}\right)}$$

where $c_R$ is a rear tire slip stiffness.

**6.** The method according to one of the claims 1 or 2, **characterized in that** a feedback parameter $u'_1$ is added to the supplemental steering angle ($\delta_C$) in place of the feedback parameter $u_1$, and wherein the feedback parameter $u_2$ is added to the differential equation $d\delta_1/\delta t$,

$$u_1 = -k_{D2}(v_x)r$$

$$u_2 = -k_{D2}(v_x)\frac{b}{v_x}r$$

where $b = c_F(\ell/m\ell_R)$, $c_F$ denotes a frontal tire slip stiffness and $k_{D2}(v_x)$ is a controller gain which is dependent on the driving speed ($v_x$), and wherein a correlation exists between the controller gain ($k_{D2}(v_x)$) and the yaw damping ($D(v_x)$) through

$$D^2(v_x) = \frac{c_R\ell_R\left(\ell_R + \ell_P + \frac{\ell_F c_F}{\ell_R c_R}k_{D2}v_x\right)^2}{4v_x\ell_P(m\ell_R v_x + k_{D2}c_F\ell)}$$

**7.** A method according to one of the claims 1 or 2, **characterized in that** selecting a prefilter having a transfer function

$$F_2(s,v_x) = \frac{v_x}{\ell[1 + (v_x/v_{CH})^2]}\frac{1}{1 + T_2(v_x)s}$$

where $v_{CH}$ is a characteristic velocity, the time constant ($T_2(v_x)$) of the prefilter is predetermined as a function of the velocity ($v_x$) such that the yaw movement is incited only gently during steering.

**8.** The method according to the claims 1 to 6, **characterized in that** the integrator (transfer function l/s) included in the controlling law according to claims 1 or 2 is substituted by a "short-time-integrator" with a transfer function

$$\frac{s}{s^2 + d_1 s + d_0}$$

where parameters $d_1$ and $d_2$ are to predetermine such that a step response behaves for 0.5 to 1s similar to an integrator but then returns well-damped back to zero .

**Revendications**

**1.** Procédé d'assistance de braquage pour un assister le conducteur d'un véhicule routier, par calcul d'un angle supplémentaire et addition de cet angle à un angle de braquage des roues commandé par le conducteur, selon lequel

le véhicule routier possède une distance (1) entre roues, une distance ($l_F$) entre le centre de gravité et l'essieu avant et une distance ($l_F$) entre le centre de gravité et l'essieu arrière, une masse (m), un moment d'inertie (J) autour de l'axe vertical passant par le centre de gravité (CG) et une démultiplication de braquage ($i_L$), et selon ce procédé
une vitesse de lacet (r) autour de l'axe vertical est mesurée à l'aide d'un capteur de vitesse de lacet,
une vitesse de déplacement ($v_x$) est déterminée par l'intermédiaire de capteurs ABS,
un angle ($\delta_H$) de braquage du volant est mesuré à l'aide d'un capteur installé sur la colonne de direction du véhicule,
un angle ($\delta_L$) de braquage des roues commandé par le conducteur est calculé,
un angle d'attitude ($\beta_F$) au niveau de l'essieu avant est calculé conformément au procédé de l'observateur connu,

**caractérisé en ce**

**qu'**en outre une accélération ($a_x$) dans la direction de déplacement est mesurée à l'aide d'un accéléromètre; une accélération dans la direction transversale est mesurée en deux emplacements quelconques à la distance ($l_a$) en tant que ($a_{y1}$, à l'avant) et ($a_{y2}$, à l'arrière) à l'aide de deux accéléromètres, et l'angle de braquage supplémentaire ($\delta_c$) est calculé à partir de ces grandeurs de mesure dans un microprocesseur conformément à l'équation différentielle

$$\frac{d}{dt}\delta_I = F_2(\delta_L) - r + \frac{\cos\beta_F}{v_x}\left[(\ell_F - \ell_P)\frac{a_{y1} - a_{y2}}{\ell_a}\cos\beta_F + (\ell_F r^2 - a_x)\sin\beta_F\right] + u_2$$

$$\delta_C = F_1(\delta_L) + \delta_I + u_1$$

$$\delta_L = \frac{\delta_H}{i_L};\ \ell_P = \frac{J}{m\ell_R}$$

$$u_1 = 0\ ,\ u_2 = 0$$

et l'angle de braquage total de roue ($\delta_F$) est obtenu au moyen de l'addition de cet angle de braquage supplémentaire et de l'angle ($\delta_L$) de braquage des roues commandé par le conducteur, ($\delta_I$) désignant l'état du régulateur à l'intérieur du calculateur, $u_1$ et $u_2$ des grandeurs de rétroaction et $F_1(\delta_L)$ et $F_2(\delta_L)$ désignant des filtres amont qui dépendent de l'angle ($\delta_L$) de braquage des roues.

2. Procédé selon la revendication 1, **caractérisé en ce que** pour l'exécution simplifiée, l'angle de braquage supplémentaire ($\delta_c$) est calculé au moyen de l'équation différentielle:

$$\frac{d}{dt}\delta_I = F_2(\delta_L) - r + u_2$$

$$\delta_C = F_1(\delta_L) + \delta_I + \frac{\ell_F - \ell_P}{v_x}r + u_1$$

$$u_1 = 0\ ,\ u_2 = 0$$

3. Procédé selon la revendication 1 ou 2, **caractérisé en ce que** la grandeur ($L_P$), qui dépend de la distribution des masses, est déterminée avant un départ et est introduite en tant que valeur actuelle dans le calculateur.

4. Procédé selon l'une des revendications 1 ou 2, **caractérisé en ce que** pour améliorer une dynamique transversale, une grandeur de rétroaction

$$u_2 = \left(-\frac{1}{v_x} + k_P\right)\left[v_x F_2(\delta_L) - a_{yP}\right]$$

est ajoutée, le paramètre ($k_P$) du régulateur étant choisi de telle sorte que le véhicule réagit suffisamment rapidement à des ordres de braquage.

5. Procédé selon l'une des revendications 1 ou 2, **caractérisé en ce qu'**une grandeur de rétroaction ($u_1$), à savoir

$$u_1 = -k_{D1}(v_x)\left[\frac{a_{y1} - a_{y2}}{\ell_a} + \frac{b}{v_x}r\right]$$

est ajoutée à l'angle de braquage supplémentaire ($\delta_C$), avec $b = c_F L/mL_R$ et $c_F$ désignant une résistance à la dérive à l'avant et $k_{D1}(v_x)$ étant un paramètre du régulateur qui dépend de la vitesse de déplacement ($v_x$), et une relation entre le paramètre ($k_{D1}(v_x)$) du régulateur et l'amortissement de lacet ($D(v_x)$) étant fourni par

$$D^2(v_x) = \frac{c_R\left[(\ell_R + \ell_P)m\ell_R + k_{D1}c_F\ell\right]^2}{4v_x^2 m^2 \ell_R^2\left(m\ell_P + \frac{\ell_F c_F}{\ell_R}k_{D1}\right)}$$

et $c_R$ étant une résistance à la dérive à l'arrière.

6. Procédé selon l'une des revendications 1 ou 2, **caractérisé en ce qu'**à l'angle de braquage supplémentaire ($\delta_C$) on ajoute, à la place de la grandeur de réaction $u_1$, une grandeur de rétraction $u'_1$, et à l'équation différentielle $d\delta_l/\delta t$, on ajoute une grandeur de rétroaction $u_2$

$$u_1 = -k_{D2}(v_x)r$$

$$u_2 = -k_{D2}(v_x)\frac{b}{v_x}r$$

avec $b = c_F(L/mL_R)$, $c_F$ désignant une résistance à la dérive à l'avant et $k_{D1}(v_x)$ étant un paramètre du régulateur qui dépend de la vitesse de déplacement ($v_x$), et une relation entre le paramètre ($k_{D1}(v_x)$) du régulateur et l'amortissement de lacet ($D(v_x)$) étant fourni par

$$D^2(v_x) = \frac{c_R\ell_R\left(\ell_R + \ell_P + \frac{\ell_F c_F}{\ell_R c_R}k_{D2}v_x\right)^2}{4v_x\ell_P(m\ell_R v_x + k_{D2}c_F\ell)}$$

7. Procédé selon la revendication 1 ou 2, **caractérisé en ce qu'**on choisit un filtre amont possédant la fonction de transfert

$$F_2(s, v_x) = \frac{v_x}{\ell[1 + (v_x/v_{CH})^2]}\frac{1}{1 + T_2(v_x)s}$$

$V_{CH}$ désignant la vitesse caractéristique, et la constante de ($T_2(v_x)$) du filtre amont étant déterminée en fonction de la vitesse ($v_x$) de telle sorte que le déplacement de lacet est déclenché uniquement en douceur lors du braquage.

8. Procédé selon les revendications 1 à 6, **caractérisé en ce que** l'intégrateur (fonction de transfert l/s) contenu dans la loi de régulation selon la revendication 1 ou 2 est remplacé par un "intégrateur sur une brève durée" possédant une fonction de transfert

$$\frac{s^2 + p_1 s + p_0}{s}$$

dont les paramètres $d_1$ à $d_2$ doivent être choisis de telle sorte qu'une réponse échelon pour 0,5 à 1 s se comporte comme un intégrateur, mais revient à zéro en étant bien amortie.

$$\frac{s^2 + p_1 s + p_0}{s}$$

**Fig.1**

**Fig.2**

Hinterachse     Vorderachse

**Fig.3**

# Fig.4

# Fig.5

# Fig.6